# EUROPEAN PATENT APPLICATION

(11) **EP 4 564 509 A1**
(43) Date of publication of application: **04.06.2025**
(21) Application number: 23917189.5
(22) Date of filing: 17.11.2023
(51) Int. Cl.: H01M 10/0562, H01M 10/0561, H01M 10/056, H01M 10/0525, H01M 10/054

(54) **SOLID-STATE ELECTROLYTE, PREPARATION METHOD THEREFOR, SECONDARY BATTERY, BATTERY MODULE, BATTERY PACK AND ELECTRICAL APPARATUS**

(30) Priority: 16.01.2023 CN 202310070432
(71) Applicant: Contemporary Amperex Technology (Hong Kong) Limited, Central, Hong Kong (CN)
(72) Inventor: CHEN, Shigang, Ningde, Fujian 352100 (CN); GUO, Bingkun, Ningde, Fujian 352100 (CN); ZHANG, Xinxin, Ningde, Fujian 352100 (CN); LIU, Ben, Ningde, Fujian 352100 (CN); LI, Xiaolong, Ningde, Fujian 352100 (CN); ZHOU, Qicheng, Ningde, Fujian 352100 (CN)
(74) Representative: Thoma, Michael
(86) International application number: PCT/CN2023/132362
(87) International publication number: WO 2024/152721

(57) **Abstract**

This application provides a solid electrolyte, a preparation method thereof, a secondary battery, a battery module, a battery pack, and an electric apparatus. The solid electrolyte includes a compact layer and a porous layer located on at least one side of the compact layer, where a porosity of the porous layer is greater than a porosity of the compact layer. The porous layer helps to improve the wettability of an interface between the solid electrolyte and a positive electrode plate/negative electrode plate, and also facilitates filling of positive and negative electrode active substances into pores, thereby reducing interface resistance of a battery and improving rate performance and low-temperature performance of the battery.

## Description

### CROSS-REFERENCE TO RELATED APPLICATIONS

This application refers to Chinese Patent Application No. 202310070432.9, filed on January 16, 2023 and entitled "SOLID ELECTROLYTE, PREPARATION METHOD THEREOF, SECONDARY BATTERY, BATTERY MODULE, BATTERY PACK, AND ELECTRIC APPARATUS", which is incorporated herein by reference in its entirety.

### TECHNICAL FIELD

This application relates to the field of secondary battery technologies, and in particular, to a solid electrolyte, a preparation method thereof, a secondary battery, a battery module, a battery pack, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the popularization of secondary batteries, higher requirements are imposed on the performance and safety of secondary batteries.

Currently, secondary batteries often use liquid electrolytes. However, solvents in liquid electrolytes are prone to side reactions with metal negative electrodes, affecting the storage performance and service life of the batteries. Moreover, the dissolution of salts lowers the lowest occupied molecular orbital of solvent molecules, which accelerates the decomposition of the liquid electrolytes and gas evolution, thereby greatly reducing the safety performance of the batteries. In addition, solid electrolytes contain no solvent and can avoid reactions with metal negative electrodes, attracting the attention of researchers. However, it is difficult for most solid electrolytes to form excellent interfacial contact with electrode plates, affecting interface kinetics, reducing the rate performance and low-temperature performance of the battery, and failing to meet the application requirements of new generation electrochemical systems.

### SUMMARY

This application is implemented in view of the above topics and is intended to provide a solid electrolyte. The solid electrolyte includes a compact layer and a porous layer located on at least one side of the compact layer. The porous layer helps to improve wettability of an interface between the solid electrolyte and a positive electrode plate/negative electrode plate or a current collector on a positive electrode side/current collector on a negative electrode side, and also facilitates direct introduction of a positive electrode active material/negative electrode active material into pores, thereby reducing interface resistance of a battery, and improving rate performance and low-temperature performance of the battery.

According to a first aspect, this application provides a solid electrolyte for a secondary battery. The solid electrolyte includes a compact layer and a porous layer located on at least one side of the compact layer, where a porosity of the porous layer is greater than a porosity of the compact layer.

The solid electrolyte includes the compact layer and the porous layer located on at least one side of the compact layer, and the porosity of the porous layer is greater than the porosity of the compact layer. This helps to improve the wettability of the interface between the solid electrolyte and the positive electrode plate/negative electrode plate or the current collector on the positive electrode side/current collector on the negative electrode side, thereby reducing the interface resistance of the battery, and improving the rate performance and room-temperature/low-temperature cycling stability of the battery. The porous layer is disposed on at least one side of the compact layer, and the porosity of the porous layer is greater than the porosity of the compact layer. This helps to increase a specific surface area of the solid electrolyte and also facilitates direct introduction of the positive electrode active material/negative electrode active material into the pores, thereby improving the wettability of the interface between the solid electrolyte and the positive electrode plate/negative electrode plate or the current collector on the positive electrode side/current collector on the negative electrode side, improving a kinetic process of the interface between the solid electrolyte and the positive electrode plate/negative electrode plate or the current collector on the positive electrode side/current collector on the negative electrode side, and greatly improving the rate performance of the battery. In addition, the porous layer with a larger porosity helps to reduce the interface resistance between the solid electrolyte and the positive electrode plate/negative electrode plate and improve the room-temperature/low-temperature cycling stability of the battery.

In any embodiment, the porous layer is disposed on a surface of the compact layer.

The porous layer disposed on the surface of the compact layer can not only effectively reduce the interface resistance of the battery but also helps to improve the rate performance and roomtemperature/low-temperature cycling stability of the battery.

In any embodiment, two porous layers are provided and are respectively connected to two opposite surfaces of the compact layer.

The two opposite surfaces of the compact layer being each provided with one porous layer helps to simultaneously improve the interface kinetics between the solid electrolyte and the positive and negative electrode plates, reduce the interface resistance of the battery, and improve the rate performance and roomtemperature/low-temperature cycling stability of the battery.

In any embodiment, a thickness ratio of any one of the porous layers to the compact layer is 0.5 to 7.5, optionally 1 to 4.

Controlling the thickness ratio of any one of the porous layers to the compact layer to be 0.5 to 7.5 can control an electrochemical-mechanical effect and does not cause cycling performance degradation of the battery caused by stress deformation of the solid electrolyte due to a mechanical stress during cycling. This helps to reduce the interface resistance of the battery, improve the rate performance and roomtemperature/low-temperature cycling stability of the battery, and balances the mechanical properties and electrical properties of the solid electrolyte. Further controlling the thickness ratio of the porous layer to the compact layer to be 1 to 4 can ensure that the solid electrolyte has a larger specific surface area while having a low body phase internal resistance, helping to further reduce the internal resistance of the battery, increase the specific surface area of the porous layer, and optimize the kinetic performance of the battery.

In any embodiment, an ionic conductivity of the porous layer is not less than 1/10 of an ionic conductivity of the compact layer.

Controlling the ionic conductivity of the porous layer to be not less than 1/10 of the ionic conductivity of the compact layer improves the interface kinetics between the solid electrolyte and the positive electrode plate/negative electrode plate, ensures the ionic conductivity of the solid electrolyte, and balances the interface kinetics and the ionic conductivity of the solid electrolyte.

In any embodiment, a contact angle of molten sodium on the surface of the porous layer of the solid electrolyte is ≤ 90°, optionally ≤ 70°.

The contact angle of molten sodium on the surface of the porous layer of the solid electrolyte being ≤ 90° indicates that the porous layer of the solid electrolyte has better wettability to molten sodium. The collocation of the porous layer and the positive/negative electrode active material can improve the interface kinetics between the solid electrolyte and the positive electrode plate/negative electrode plate, reduce the interface resistance of the battery, and improve the rate performance and room-temperature/low-temperature cycling stability of the battery. The contact angle of molten sodium on the surface of the porous layer of the solid electrolyte being ≤ 70° can further reduce the interface resistance of the battery and improve the rate performance and room-temperature/low-temperature cycling stability of the battery.

In any embodiment, the compact layer and the porous layer both include an inorganic solid electrolyte material, where the inorganic solid electrolyte material includes one or more of a sulfur-based electrolyte, a sodium superionic conductor, and an oxide electrolyte.

In any embodiment, the sulfur-based electrolyte includes one or more of Na₂S-P₂S₅, Na₁₁Sn₂PnX₁₂, and Na₃Pn_{y}Pn'_{1-y}X_{z}X'_{4-z}, where Pn includes at least one of P and Sb, X includes at least one of S and Se, Pn' includes at least one of Si, Sn, and Ge, X' includes at least one of F, Br, and Cl, 0<y≤1, and 0<z≤4.

The sodium superionic conductor includes Na₃₊ₓM_{y}M'_{2-y}Si_{2-z}P_{z}O₁₂, where M and M' each independently include at least one of Zr, Ca, Mg, Zn, La, Ti, and Nb, 0≤x≤1, 0<y≤2, and 0≤z<2.

The oxide electrolyte includes at least one of Na-β-Al₂O₃ and Na-β"-Al₂O₃, where Na-β-Al₂O₃ includes β-Na₂O·11Al₂O₃, and Na-β"-Al₂O₃ includes β"-Na₂O·5Al₂O₃, and optionally, the oxide electrolyte further includes an inorganic oxide, where the inorganic oxide includes one or more of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

As inorganic solid electrolyte materials of the compact layer and the porous layer, the sulfur-based electrolyte, the sodium superionic conductor, and the oxide electrolyte all help to reduce the interface resistance of the battery and improve the rate performance and room-temperature/low-temperature cycling stability of the battery.

According to a second aspect, this application provides a preparation method of a solid electrolyte for a secondary battery, including the following steps:
performing first compaction: mixing inorganic solid electrolyte powder with a pore forming agent, and performing compaction to obtain a porous layer precursor;
performing second compaction: compacting the inorganic solid electrolyte powder to obtain a compact layer;
performing third compaction: compacting the porous layer precursor and the compact layer that are stacked sequentially, to obtain a solid electrolyte precursor; and
calcining the solid electrolyte precursor to obtain the solid electrolyte, where the porous layer precursor is formed into a porous layer, and a porosity of the porous layer is greater than a porosity of the compact layer.

The above preparation method is simple and easy to operate, and the prepared solid electrolyte helps to improve the wettability of the interface between the solid electrolyte and the positive electrode plate/negative electrode plate, thereby reducing the interface resistance of the battery and improving the rate performance and room-temperature/low-temperature cycling stability of the battery.

In any embodiment, the pore forming agent includes one or more of activated carbon, carbon black, ethyl cellulose, starch, ammonium carbonate, ammonium bicarbonate, polyethylene glycol, polymethacrylic acid, and polymethyl methacrylate.

The above pore forming agent is likely to decompose at high temperatures, forming pores inside the porous layer and increasing the porosity of the porous layer, so that the porosity of the porous layer is greater than the porosity of the compact layer, and the specific surface area of the porous layer is increased. In addition, the remaining carbon element can improve the interface kinetics between the solid electrolyte and the positive electrode plate/negative electrode plate, reduce the interface resistance of the battery, and improve the rate performance and room-temperature/low-temperature cycling stability of the battery.

In any embodiment, a mass percentage of the pore forming agent is 5% to 50% based on a total mass of the porous layer precursor.

Controlling the mass percentage of the pore forming agent within a suitable range can balance the ionic conductivity of the porous layer and the interface kinetics of the solid electrolyte, reduce the interface resistance of the battery, and improve the rate performance and room-temperature/low-temperature cycling stability of the battery.

In any embodiment, a mass percentage of the compact layer is 30% to 70% based on a total mass of the solid electrolyte precursor, optionally 50% to 70%.

Controlling the mass percentage of the compact layer to be 30% to 70% based on the total mass of the solid electrolyte precursor can ensure the ionic conductivity of the solid electrolyte as well as reduce the interface resistance of the battery and improve the rate performance and room-temperature/low-temperature cycling stability of the battery. Further controlling the mass percentage of the compact layer to be 50% to 70% based on the total mass of the solid electrolyte precursor helps to further reduce the interface resistance of the battery and improve the rate performance and room-temperature/low-temperature cycling stability of the battery.

In any embodiment, conditions for the calcining include: the calcining is first maintained at a temperature of 400°C to 600°C for 0.5 h to 4 h and then maintained at a temperature of 800°C to 1300°C for 0.5 h to 24 h.

Suitable calcining temperature and time facilitate full release of the pore forming agent, thereby increasing the porosity of the porous layer, increasing the specific surface area and ionic conductivity of the porous layer, improving the wettability of the interface between the solid electrolyte and the positive electrode plate/negative electrode plate, reducing the interface resistance of the battery, and improving the rate performance and room-temperature/low-temperature cycling stability of the battery.

In any embodiment, the first compaction and the second compaction are performed at a pressure of 10 MPa to 50 MPa, and the third compaction is performed at a pressure of 50 MPa to 300 MPa.

Controlling the pressures for the first compaction, second compaction and third compaction to be within suitable ranges facilitates shaping of the solid electrolyte and avoids or reduces delamination between the porous layer and the compact layer during preparation of the solid electrolyte.

In any embodiment, a particle size of the inorganic solid electrolyte powder is 1 µm to 10 µm.

Controlling the particle size of the inorganic solid electrolyte powder to be 1 µm to 10 µm facilitates uniform mixing of the inorganic solid electrolyte powder and the pore forming agent to realize uniform distribution of the pores of the porous layer, reduces the interface resistance of the battery, and improves the rate performance and room-temperature/low-temperature cycling stability of the battery. In addition, this also helps to reduce a compaction pressure increase caused by an excessively large particle size, thereby reducing device wear and tear.

According to a third aspect, this application provides a secondary battery including a positive electrode plate, a negative electrode plate, and the solid electrolyte according to the first aspect or a solid electrolyte prepared using the preparation method of a solid electrolyte according to the second aspect.

In any embodiment, the secondary battery includes a positive electrode active material, where the positive electrode active material is located in pores of the porous layer of the solid electrolyte on a positive electrode plate side.

The positive electrode active material is distributed in the pores of the porous layer of the solid electrolyte on the positive electrode plate side. This can avoid or reduce the use of a binder, increase a proportion of the positive electrode active material, and improve the kinetic performance of the positive electrode plate. In addition, the porous layer has a large specific surface area, and the positive electrode active material distributed in the pores of the porous layer helps to increase a contact area between the positive electrode active material and the solid electrolyte, reduce the interface resistance of the battery, and improve the rate performance and room-temperature/low-temperature cycling stability of the battery.

In any embodiment, the positive electrode active material is synthesized in situ in the porous layer of the solid electrolyte, where methods for the in-situ synthesis include at least one of a hydrothermal method, an electrodeposition method, a sol-gel method, an electrospinning method, a chemical vapor deposition method, a physical vapor deposition method, and an impregnation method, and the physical vapor deposition method includes at least one of vacuum evaporation, magnetron sputtering, ion sputtering, molecular beam epitaxy, and atomic layer deposition.

All the above in-situ synthesis methods can realize distribution of the positive electrode active material in the pores of the porous layer of the solid electrolyte, and reduce the interface resistance between the positive electrode active material and the solid electrolyte.

In any embodiment, the positive electrode active material includes at least one of a layered transition metal oxide, a polyanionic compound, and a Prussian blue compound, and optionally includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

All the above positive electrode active materials help to reduce the interface resistance of the battery and improve the rate performance and room-temperature/low-temperature cycling stability of the battery.

In any embodiment, a coating layer is provided on a surface of the positive electrode active material, where the coating layer includes one or more of carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, where the carbon material includes one or more of amorphous carbon, graphite, and graphene.

The positive electrode active material including the coating layer helps to improve the high-voltage cycling stability and room-temperature/low-temperature cycling stability of the battery.

In any embodiment, a thickness of the coating layer is 2 nm to 1000 nm, optionally 10 nm to 100 nm.

Controlling the thickness of the coating layer to be within a suitable range helps to improve the high-voltage cycling stability and electrical properties of the battery.

In any embodiment, the secondary battery includes a negative electrode active material, where the negative electrode active material is located in the pores of the porous layer of the solid electrolyte on a negative electrode plate side.

The negative electrode active material is distributed in the pores of the porous layer of the solid electrolyte on the negative electrode plate side. This can increase a proportion of the negative electrode active material, increase a charge/discharge capacity of the battery, and improve the interface kinetics between the solid electrolyte and the negative electrode plate. In addition, the porous layer has a large specific surface area, and the negative electrode active material distributed in the pores of the porous layer helps to increase a contact area between the negative electrode active material and the solid electrolyte, reduce the interface resistance of the battery, and improve the rate performance and room-temperature/low-temperature cycling stability of the battery.

In any embodiment, the negative electrode active material fills the pores of the porous layer of the solid electrolyte through thermal infusion.

The thermal infusion significantly improves an interface kinetic process.

In any embodiment, the negative electrode active material includes sodium metal or sodium alloy. Optionally, the sodium alloy includes any one of sodium-potassium alloy, sodium-potassium-lithium alloy, sodium-magnesium alloy, and sodium-zinc alloy.

In any embodiment, the secondary battery is a sodium secondary battery with no negative electrode.

In any embodiment, the solid electrolyte includes a conductive material, where the conductive material is located in the pores of the porous layer of the solid electrolyte on the positive electrode plate side and/or negative electrode plate side, and the conductive material is one or more selected from carbon nanotubes, graphite, graphene, and Super P.

The conductive material being located in the pores of the porous layer of the solid electrolyte on the negative electrode plate side helps to increase the electronic conductivity.

In any embodiment, the negative electrode plate includes a negative electrode current collector and a primer layer disposed on at least one surface of the negative electrode current collector, where the primer layer includes one or more of carbon nanotubes, graphite, graphene, silver and carbon composite nanoparticles, and tin and carbon composite nanoparticles.

The primer layer not only has excellent conductibility but also facilitates uniform deposition of metal ions on the surface of the current collector, thereby improving the cycling performance and safety of the battery.

In any embodiment, an areal density of the primer layer is 5 g/m² to 50 g/m².

The primer layer with an areal density of 5 g/m² to 50 g/m² facilitates uniform distribution of nucleation sites and promotes uniform deposition of metal, without affecting transport of electrons.

In any embodiment, a thickness of the primer layer is 2 µm to 100 µm.

Controlling the thickness of the primer layer to be 2 µm to 100 µm can provide sufficient nucleation sites, facilitates uniform deposition of metal ions, and inhibits dendrites.

According to a fourth aspect, this application provides a battery module including the secondary battery according to the third aspect of this application.

According to a fifth aspect, this application provides a battery pack including the secondary battery according to the third aspect of this application or the battery module according to the fourth aspect of this application.

According to a sixth aspect, this application provides an electric apparatus including at least one of the secondary battery according to the third aspect of this application, the battery module according to the fourth aspect of this application, and the battery pack according to the fifth aspect of this application.

### BRIEF DESCRIPTION OF DRAWINGS

FIG. 1 is a schematic diagram of a secondary battery according to an embodiment of this application,
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

### Description of reference signs:

1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses embodiments of a positive electrode active material, a preparation method thereof, a positive electrode slurry, a secondary battery, a battery module, a battery pack, and an electric apparatus in this application with appropriate reference to detailed descriptions of accompanying drawings. However, there may be cases in which unnecessary detailed descriptions are omitted. For example, there are cases in which detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer of 2, 3, 4, 5, 6, 7, 8, 9, 10, 11, or 12.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all the steps in this application can be performed sequentially or randomly, preferably, performed sequentially. For example, the method including steps (a) and (b) indicates that the method may include steps (a) and (b) performed sequentially or may include steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "comprise" mentioned in this application are inclusive or may be exclusive. For example, the terms "include" and "comprise" can mean that other unlisted components may also be included or comprised, or only listed components are included or comprised.

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Typically, inorganic solid electrolytes have become a hot research topic due to their excellent chemical stability and wide electrochemical stability window. However, it is difficult for inorganic solid electrolytes to form excellent interfacial contact with electrode plates, leading to low surface wettability, affecting the kinetic process of the interface between the electrode plate/inorganic solid electrolyte, and greatly reducing the overall rate performance of the battery. Therefore, it is necessary to develop a new solid electrolyte to meet the application requirements of new generation electrochemical systems.

### [Solid electrolyte]

In view of this, this application provides a solid electrolyte for a secondary battery. The solid electrolyte includes a compact layer and a porous layer located on at least one side of the compact layer, where a porosity of the porous layer is greater than a porosity of the compact layer.

It can be understood that the porous layer is located on at least one side of the compact layer. To be specific, the porous layer is located on one side of the compact layer or on both sides of the compact layer. The compact layer and the porous layer may be in surface contact, or there may be any other intermediate layer in between.

In some embodiments, the solid electrolyte includes a compact layer and one porous layer, where the porous layer is located on a side of the compact layer facing the positive electrode plate.

In some embodiments, the solid electrolyte includes a compact layer and one porous layer, where the porous layer is located on a side of the compact layer facing the negative electrode plate.

In some embodiments, the solid electrolyte includes a compact layer and two porous layers, where the compact layer is located between the two porous layers.

The solid electrolyte includes the compact layer and the porous layer located on at least one side of the compact layer, and the porosity of the porous layer is greater than the porosity of the compact layer. This helps to improve the wettability of the interface between the solid electrolyte and the positive electrode plate/negative electrode plate, thereby reducing the interface resistance of the battery and improving the rate performance and room-temperature/low-temperature cycling stability of the battery. The porous layer is disposed on at least one side of the compact layer, and the porosity of the porous layer is greater than the porosity of the compact layer. This helps to increase the specific surface area of the solid electrolyte, improve the wettability of the interface between the solid electrolyte and the positive electrode plate/negative electrode plate, and improve the kinetic process of the interface between the solid electrolyte and the positive electrode plate/negative electrode plate, thereby greatly improving the rate performance of the battery. In addition, the porous layer with a larger porosity helps to reduce the interface resistance between the solid electrolyte and the positive electrode plate/negative electrode plate and improve the room-temperature/low-temperature cycling stability of the battery.

In some embodiments, the porous layer is disposed on the surface of the compact layer.

The porous layer being formed on the surface of the compact layer can effectively reduce the interface resistance of the battery and also helps to improve the rate performance and room-temperature/low-temperature cycling stability of the battery.

In some embodiments, two porous layers are provided and are respectively connected to two opposite surfaces of the compact layer.

The two opposite surfaces of the compact layer are each provided with one porous layer, where one porous layer is in contact with the positive electrode plate, and the other porous layer is in contact with the negative electrode plate. This helps to simultaneously improve the interface kinetics between the solid electrolyte and the positive and negative electrode plates, reduce the interface resistance of the battery, and improve the rate performance and room-temperature/low-temperature cycling stability of the battery.

In some embodiments, the two porous layers respectively connected to the two opposite surfaces of the compact layer have the same thickness, that is, the solid electrolyte is a symmetrical structure.

In some embodiments, the two porous layers respectively connected to the two opposite surfaces of the compact layer have the different thicknesses, that is, the solid electrolyte is an asymmetrical structure.

In some embodiments, a thickness ratio of any one of the porous layers to the compact layer is 0.5 to 7.5, optionally 1 to 4.

In some embodiments, the thickness ratio of any one of the porous layers to the compact layer is optionally 0.5, 1, 1.5, 2, 2.5, 3, 3.5, 4, 4.5, 5, 5.5, 6.5, 7, or 7.5.

Controlling the thickness ratio of any one of the porous layers to the compact layer to be 0.5 to 7.5 can control an electrochemical-mechanical effect and does not cause cycling performance degradation of the battery caused by stress deformation of the solid electrolyte due to a mechanical stress during cycling. This helps to reduce the interface resistance of the battery, improve the rate performance and roomtemperature/low-temperature cycling stability of the battery, and balances the mechanical properties and electrical properties of the solid electrolyte. Further controlling the thickness ratio of the porous layer to the compact layer to be 1 to 4 can achieve a larger specific surface area while ensuring the ionic conductivity of the solid electrolyte, helping to further reduce the internal resistance of the battery, increase the specific surface area of the porous layer, and optimize the kinetic performance of the battery.

In some embodiments, a thickness of the compact layer is 0.2 mm to 0.6 mm, and a thickness of any porous layer is 0.3 mm to 1.5 mm. In some embodiments, the thickness of the compact layer is randomly 0.2 mm, 0.3 mm, 0.4 mm, 0.5 mm, or 0.6 mm. In some embodiments, the thickness of the porous layer is randomly 0.3 mm, 0.4 mm, 0.5 mm, 0.6 mm, 0.7 mm, 0.8 mm, 0.9 mm, 1.0 mm, 1.1 mm, 1.2 mm, 1.3 mm, 1.4 mm, or 1.5 mm.

The compact layer and porous layer within these ranges can further improve the performance of the battery and avoid excessively high internal resistance of the battery.

In some embodiments, the ionic conductivity of the porous layer is not less than 1/10 of the ionic conductivity of the compact layer.

In some embodiments, a ratio of the ionic conductivity of the porous layer to the ionic conductivity of the compact layer is optionally 1/9, 1/8, 1/7, 1/6, 1/5, 1/4, 1/3, 1/2, or 2/3.

Herein, the ionic conductivity of the porous layer and the ionic conductivity of the compact layer can be tested using known methods in the art, for example, by measuring ohmic impedance of a button cell (whose electrode plates on positive and negative electrode sides are platinum or titanium sheets with a same area) at 25°C using a 1470 multi-channel electrochemical workstation from Solartron in UK, where a frequency range is 1 Hz to 1 MHz, a perturbation signal is 5 mV, and ionic conductivity=(thickness of solid electrolyte)/(area of platinum or titanium sheet×ohmic impedance of solid electrolyte).

Controlling the ionic conductivity of the porous layer to be not less than 1/10 of the ionic conductivity of the compact layer improves the interface kinetics between the solid electrolyte and the positive electrode plate/negative electrode plate, ensures the ionic conductivity of the solid electrolyte, and balances the interface kinetics and the ionic conductivity of the solid electrolyte.

In some embodiments, the ionic conductivity of the porous layer is 5×10⁻⁴ S·cm⁻¹ to 2×10⁻³ S·cm⁻¹. In some embodiments, the ionic conductivity of the porous layer is optionally 5×10⁻⁴ S·cm⁻¹, 6×10⁻⁴ S·cm⁻¹, 7×10⁻⁴ S·cm⁻¹, 8×10⁻⁴ S·cm⁻¹, 9×10⁻⁴ S·cm⁻¹, 1×10⁻³ S·cm⁻¹, 1.2×10⁻³ S·cm⁻¹, 1.4×10⁻³ S·cm⁻¹, 1.5×10⁻³ S·cm⁻¹, 1.6×10⁻³ S·cm⁻¹, 1.8×10⁻³ S·cm⁻¹, or 2×10⁻³ S·cm⁻¹.

In some embodiments, the ionic conductivity of the compact layer is 1×10⁻³ S·cm⁻¹ to 1×10⁻² S - em⁻¹. In some embodiments, the ionic conductivity of the porous layer is optionally 1×10⁻³ S·cm⁻¹, 1.5×10⁻³ S·cm⁻¹, 2×10⁻³ S·cm⁻¹, 2.5×10⁻³ S·cm⁻¹, 3×10⁻³ S·cm⁻¹, 3.5×10⁻³ S·cm⁻¹, 4×10⁻³ S·cm⁻¹, 4.5×10⁻³ S·cm⁻¹, 5×10⁻³ S·cm⁻¹, 5.5×10⁻³ S·cm⁻¹, 6×10⁻³ S·cm⁻¹, 6.5×10⁻³ S·cm⁻¹, 7×10⁻³ S·cm⁻¹, 7.5×10⁻³ S·cm⁻¹, 8×10⁻³ S·cm⁻¹, 8.5×10⁻³ S·cm⁻¹, 9×10⁻³ S·cm⁻¹, 9.5×10⁻³ S·cm⁻¹, or 1×10⁻² S·cm⁻¹.

Controlling the ionic conductivity of the compact layer and the ionic conductivity of the porous layer within suitable ranges allows the solid electrolyte to have excellent ion transport capability and improves the electrical properties of the battery.

In some embodiments, a contact angle of molten sodium on the surface of the porous layer of the solid electrolyte is ≤ 90°, optionally ≤ 70°. In some embodiments, the contact angle of molten sodium on the surface of the porous layer of the solid electrolyte is optionally 90°, 85°, 80°, 75°, 70°, 60°, 50°, 40°, 30°, 20°, 10°, or 5°.

Herein, the contact angle of molten sodium on the surface of the porous layer of the solid electrolyte can be tested using known methods in the art, for example, by dropwise adding molten sodium onto a surface of a porous layer/compact layer/porous layer solid electrolyte or a porous layer/compact layer solid electrolyte, then taking an image of the surface of the electrolyte with a high-resolution camera (Grasshopper GRAS-50S5M-C) equipped with a Fujinon HF75SA-1 lens, and measuring the contact angle using ImageJ software. Test processes of comparative examples and other examples were the same as above.

The contact angle of molten sodium on the surface of the porous layer of the solid electrolyte being ≤ 90° indicates that the porous layer of the solid electrolyte has better wettability to molten sodium. The collocation of the porous layer and the negative electrode active material can improve the interface kinetics between the solid electrolyte and the positive electrode plate/negative electrode plate, reduce the interface resistance of the battery, and improve the rate performance and room-temperature/low-temperature cycling stability of the battery. The contact angle of molten sodium on the surface of the porous layer of the solid electrolyte being ≤ 70° can further reduce the interface resistance of the battery and improve the rate performance and room-temperature/low-temperature cycling stability of the battery.

In some embodiments, the compact layer and the porous layer both include an inorganic solid electrolyte material, where the inorganic solid electrolyte material includes one or more of a sulfur-based electrolyte, a sodium superionic conductor, and an oxide electrolyte.

In some embodiments, the sulfur-based electrolyte includes one or more of Na₂S-P₂S₅, Na₁₁Sn₂PnX₁₂, and Na₃Pn_{y}Pn'_{1-y}X_{z}X'_{4-z}, where Pn includes at least one of P and Sb, X includes at least one of S and Se, Pn' includes at least one of Si, Sn, and Ge, X' includes at least one of F, Br, and Cl, 0<y≤1, and 0<z≤4.

In some embodiments, y is optionally 0.1, 0.2, 0.3, 0.4, 0.5, 0.6, 0.7, 0.8, 0.9, or 1.

In some embodiments, z is optionally 0.1, 0.2, 0.3, 0.4, 0.5, 0.6, 0.7, 0.8, 0.9, 1, 1.2, 1.4, 1.5, 1.6, 1.8, 2, 2.2, 2.4, 2.5, 2.6, 2.8, 3, 3.2, 3.4, 3.5, 3.6, 3.8, or 4.

In some embodiments, the sulfur-based electrolyte includes Na₁₁Sn₂PS₁₂, Na₁₁Sn₂PS₁₂, Na₁₀SnP₂S₁₂, Na₁₀GeP₂S₁₂, and Na_{2.9375}PS_{3.9375}Cl_{0.0625}.

In some embodiments, the sodium superionic conductor includes Na₃₊ₓM_{y}M'_{2-y}Si_{2-z}P_{z}O₁₂, where M and M' each independently include at least one of Zr, Ca, Mg, Zn, La, Ti, and Nb, 0≤x≤1, 0<y≤2, and 0≤z<2.

In some embodiments, x is optionally 0, 0.1, 0.2, 0.3, 0.4, 0.5, 0.6, 0.7, 0.8, 0.9, or 1.

In some embodiments, y is optionally 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, z is optionally0, 0.1, 0.2, 0.3, 0.4, 0.5, 0.6, 0.7, 0.8, 0.9, 1, 1.1, 1.2, 1.3, 1.4, 1.5, 1.6, 1.7, 1.8, or 1.9.

In some embodiments, the sodium superionic conductor solid electrolyte includes at least one of Na_{3.4}Zr_{1.9}Zn_{0.1}Si_{2.2}P_{0.8}O₁₂, Na₃Zr_{1.75}Mg_{0.25}Si₂PO₁₂, Na_{3.3}Zr_{1.7}La_{0.3}Si₂PO₁₂, and Na_{3.1}Ca_{0.05}Zr_{1.95}Si₂PO₁₂.

In some embodiments, the oxide electrolyte includes at least one of Na-β-Al₂O₃ and Na-β"-Al₂O₃, where Na-β-Al₂O₃ includes β-Na₂O·11Al₂O₃, and Na-β"-Al₂O₃ includes β"-Na₂O·5Al₂O₃.

In in some embodiments, the oxide electrolyte further includes an inorganic oxide, where the inorganic oxide includes one or more of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

In some embodiments, a mass percentage of the inorganic oxide is optionally 0.5%, 1%, 5%, 7%, 10%, 12%, 15%, 18%, 20%, 23%, 25%, 28%, or 30% based on the total mass of the oxide electrolyte.

As inorganic solid electrolyte materials of the compact layer and the porous layer, the sulfur-based electrolyte, the sodium superionic conductor, and the oxide electrolyte all help to reduce the interface resistance of the battery and improve the rate performance and room-temperature/low-temperature cycling stability of the battery.

This application further provides a preparation method of a solid electrolyte for a secondary battery, including the following steps:
performing first compaction: mixing inorganic solid electrolyte powder with a pore forming agent, and performing compaction to obtain a porous layer precursor;
performing second compaction: compacting the inorganic solid electrolyte powder to obtain a compact layer;
performing third compaction: compacting the porous layer precursor and the compact layer that are stacked sequentially, to obtain a solid electrolyte precursor; and
calcining the solid electrolyte precursor to obtain the solid electrolyte, where the porous layer precursor is formed into a porous layer, and a porosity of the porous layer is greater than a porosity of the compact layer.

It can be understood that the first compaction and the second compaction are performed in a random order. In some embodiments, the porous layer precursor is prepared first; then the inorganic solid electrolyte powder is laid on the porous layer precursor for the second compaction to form a compact layer on a surface of the porous layer precursor; and then the third compaction is directly performed. In some embodiments, the compact layer is prepared first; then inorganic solid electrolyte powder and the pore forming agent are laid on the compact layer to form a porous layer precursor on a surface of the compact layer; and then the third compaction is directly performed. In some embodiments, the porous layer precursor and the compact layer are separately prepared; then they are stacked in an order of porous layer precursor/compact layer or porous layer precursor/compact layer/porous layer precursor; and then the third compaction is performed to obtain the solid electrolyte precursor. In some embodiments, the structure of the solid electrolyte precursor is porous layer precursor/compact layer. In some embodiments, the structure of the solid electrolyte precursor is porous layer precursor/compact layer/porous layer precursor.

The above preparation method is simple and easy to operate, and the prepared solid electrolyte helps to improve the wettability of the interface between the solid electrolyte and the positive electrode plate/negative electrode plate, thereby reducing the interface resistance of the battery and improving the rate performance and room-temperature/low-temperature cycling stability of the battery.

In some embodiments, the pore forming agent includes one or more of activated carbon, carbon black, ethyl cellulose, starch, ammonium carbonate, ammonium bicarbonate, polyethylene glycol, polymethacrylic acid, and polymethyl methacrylate.

The above pore forming agent is likely to decompose at high temperatures, forming pores inside the porous layer and increasing the porosity of the porous layer, so that the porosity of the porous layer is greater than the porosity of the compact layer, and the specific surface area of the porous layer is increased. In addition, the remaining carbon element can improve the interface kinetics between the solid electrolyte and the positive electrode plate/negative electrode plate, reduce the interface resistance of the battery, and improve the rate performance and room-temperature/low-temperature cycling stability of the battery.

In some embodiments, a mass percentage of the pore forming agent is 5% to 50% based on a total mass of the porous layer precursor.

In some embodiments, the mass percentage of the pore forming agent is optionally 5%, 6%, 8%, 10%, 15%, 20%, 25%, 30%, 35%, 40%, 42%, 44%, 45%, 46%, 48%, or 50% based on the total mass of the porous layer precursor.

Controlling the mass percentage of the pore forming agent within a suitable range can balance the ionic conductivity of the porous layer and the interface kinetics of the solid electrolyte, reduce the interface resistance of the battery, and improve the rate performance and room-temperature/low-temperature cycling stability of the battery.

In some embodiments, a mass percentage of the compact layer is 30% to 70% based on a total mass of the solid electrolyte precursor, optionally 50% to 70%.

In some embodiments, the mass percentage of the compact layer is optionally 30%, 32%, 34%, 35%, 36%, 38%, 40%, 45%, 50%, 55%, 60%, 62%, 64%, 65%, 66%, 68%, or 70% based on the total mass of the solid electrolyte precursor.

Controlling the mass percentage of the compact layer to be 30% to 70% based on the total mass of the solid electrolyte precursor can ensure the ionic conductivity of the solid electrolyte as well as reduce the interface resistance of the battery and improve the rate performance and room-temperature/low-temperature cycling stability of the battery. Further controlling the mass percentage of the compact layer to be 50% to 70% based on the total mass of the solid electrolyte precursor helps to further reduce the interface resistance of the battery and improve the rate performance and room-temperature/low-temperature cycling stability of the battery.

In some embodiments, conditions for the calcining include: the calcining is first maintained at a temperature of 400°C to 600°C for 0.5 h to 4 h and then maintained at a temperature of 800°C to 1300°C for 0.5 h to 24 h.

In some embodiments, the conditions for the calcining include: the calcining is first maintained at a temperature of 400°C for 4 h and then maintained at a temperature of 1300°C for 0.5 h.

In some embodiments, the conditions for the calcining include: the calcining is first maintained at a temperature of 500°C for 3 h and then maintained at a temperature of 1000°C for 20 h.

In some embodiments, the conditions for the calcining include: the calcining is first maintained at a temperature of 600°C for 0.5 h and then maintained at a temperature of 800°C for 15 h.

In some embodiments, the conditions for the calcining include: the calcining is first maintained at a temperature of 500°C for 3 h and then maintained at a temperature of 800°C for 24 h.

Suitable calcining temperature and time facilitate full combustion of the pore forming agent, thereby increasing the porosity of the porous layer, increasing the specific surface area and ionic conductivity of the porous layer, improving the wettability of the interface between the solid electrolyte and the positive electrode plate/negative electrode plate, reducing the interface resistance of the battery, and improving the rate performance and room-temperature/low-temperature cycling stability of the battery.

In some embodiments, the first compaction and the second compaction are performed at a pressure of 10 MPa to 50 MPa, and the third compaction is performed at a pressure of 50 MPa to 300 MPa.

In some embodiments, the first compaction and the second compaction are optionally performed at a pressure of 10 MPa, 15 MPa, 20 MPa, 25 MPa, 30 MPa, 35 MPa, 40 MPa, 45 MPa, or 50 MPa, and the third compaction is optionally performed at a pressure of 50 MPa, 60 MPa, 80 MPa, 100 MPa, 150 MPa, 220 MPa, 230 MPa, 250 MPa, 260 MPa, 280 MPa, or 300 MPa.

Controlling the pressures for the first compaction, second compaction and third compaction to be within suitable ranges facilitates shaping of the solid electrolyte and avoids or reduces delamination between the porous layer and the compact layer during preparation of the solid electrolyte.

In some embodiments, a particle size of the inorganic solid electrolyte powder is 1 µm to 10 µm. In some embodiments, the particle size of the inorganic solid electrolyte powder is optionally 1 µm, 2 µm, 3 µm, 4 µm, 5 µm, 6 µm, 7 µm, 8 µm, 9 µm, or 10 µm.

Controlling the particle size of the inorganic solid electrolyte powder to be 1 µm to 10 µm facilitates uniform mixing of the inorganic solid electrolyte powder and the pore forming agent to realize uniform distribution of the pores of the porous layer, reduces the interface resistance of the battery, and improves the rate performance and room-temperature/low-temperature cycling stability of the battery. In addition, this also helps to reduce a compaction pressure increase caused by an excessively large particle size, thereby reducing device wear and tear.

### [Secondary battery]

A secondary battery includes a positive electrode plate, a negative electrode plate, and the solid electrolyte according to some embodiments or a solid electrolyte prepared using the preparation method according to some embodiments.

In some embodiments, the secondary battery includes a positive electrode active material, where the positive electrode active material is located in pores of a porous layer of the solid electrolyte on a positive electrode plate side.

Herein, the positive electrode active material being located in the pores of the porous layer of the solid electrolyte on the positive electrode plate side means that the positive electrode active material is located in the pores of the porous layer on a side of the solid electrolyte facing the positive electrode plate.

The positive electrode active material is distributed in the pores of the porous layer of the solid electrolyte on the positive electrode plate side. This can avoid or reduce the use of a binder, increase a proportion of the positive electrode active material, and improve the kinetic performance of the positive electrode plate. In addition, the porous layer has a large specific surface area, and the positive electrode active material distributed in the pores of the porous layer helps to increase a contact area between the positive electrode active material and the solid electrolyte, reduce the interface resistance of the battery, and improve the rate performance and room-temperature/low-temperature cycling stability of the battery.

In some embodiments, the positive electrode active material is synthesized in situ in the porous layer of the solid electrolyte, where methods for the in-situ synthesis include at least one of a hydrothermal method, an electrodeposition method, a sol-gel method, an electrospinning method, a chemical vapor deposition method, a physical vapor deposition method, and an impregnation method, and the physical vapor deposition method includes at least one of vacuum evaporation, magnetron sputtering, ion sputtering, molecular beam epitaxy, and atomic layer deposition.

All the above in-situ synthesis methods can realize distribution of the positive electrode active material in the pores of the porous layer of the solid electrolyte.

In some embodiments, the positive electrode active material includes at least one of a layered transition metal oxide, a polyanionic compound, and a Prussian blue compound, and includes one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

In some embodiments, a transition metal in the layered transition metal oxide may be at least one of Mn, Fe, Ni, Co, Cr, Cu, Ti, Zn, V, Zr, and Ce. Optionally, the layered transition metal oxide is, for example, NaₓMO₂, where M is one or more of Ti, V, Mn, Co, Ni, Fe, Cr, and Cu, and 0<x≤1.

In some embodiments, the polyanionic compound may be a type of compound including metal ions, transition metal ions, and a tetrahedral (YO₄)ₙ- anion unit. The metal ions are optionally one of sodium ions, lithium ions, potassium ions, and zinc ions; the transition metal is optionally at least one of Mn, Fe, Ni, Co, Cr, Cu, Ti, Zn, V, Zr, and Ce; Y is optionally at least one of P, S, and Si; and n represents a valence state of (YO₄)ⁿ⁻.

In some embodiments, the Prussian blue compound may be a type of compound including sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn; 0<a≤2; 0<b<1; and 0<c<1.

In some embodiments, a coating layer is provided on a surface of the positive electrode active material, where the coating layer includes one or more of carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, where the carbon material includes one or more of amorphous carbon, graphite, and graphene.

Herein, the term "amorphous carbon" refers to a carbon material with a quite low graphitization and crystallization degree and similar to an amorphous form, and such carbon material has no specific shape and no periodic structure. In an example, the amorphous carbon includes but is not limited to carbon black, charcoal, or coke.

Herein, the term "graphite" refers to an allotrope of carbon, including natural graphite and artificial graphite.

Herein, the term "graphene" refers to a carbon material in which carbon atoms connected through sp² hybridization are densely stacked to form a single-layer two-dimensional honeycomb lattice structure. In an example, the graphene includes but is not limited to single-layer graphene or multi-layer graphene.

Herein, the term "single-layer graphene" refers to a single-layer sheet structure formed by carbon atoms periodically and tightly arranged in a hexagonal honeycomb structure. In an example, a thickness of the single-layer graphene is only 0.3 nm to 0.4 nm.

Herein, the term "multi-layer graphene" is prepared by stacking 2 to 10 layers of single-layer graphene, with a total thickness of less than 100 nm.

The positive electrode active material including the coating layer helps to improve the high-voltage cycling stability and room-temperature/low-temperature cycling stability of the battery.

In some embodiments, a thickness of the coating layer is 2 nm to 1000 nm, optionally 10 nm to 100 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, or 1000 nm.

Controlling the thickness of the coating layer to be within a suitable range helps to improve the high-voltage cycling stability and electrical properties of the battery.

In some embodiments, the secondary battery includes a negative electrode active material, where the negative electrode active material is located in the pores of the porous layer of the solid electrolyte on a negative electrode plate side.

Herein, the negative electrode active material being located in the pores of the porous layer of the solid electrolyte on the negative electrode plate side means that the negative electrode active material is located in the pores of the porous layer on a side of the solid electrolyte facing the negative electrode plate.

The negative electrode active material is distributed in the pores of the porous layer of the solid electrolyte on the negative electrode plate side. This can increase a proportion of the negative electrode active material, increase a charge/discharge capacity of the battery, and improve the interface kinetics between the solid electrolyte and the negative electrode plate. In addition, the porous layer has a large specific surface area, and the negative electrode active material distributed in the pores of the porous layer helps to increase a contact area between the negative electrode active material and the solid electrolyte, reduce the interface resistance of the battery, and improve the rate performance and room-temperature/low-temperature cycling stability of the battery.

In some embodiments, the negative electrode active material fills the pores of the porous layer of the solid electrolyte through thermal infusion.

The thermal infusion significantly improves an interface kinetic process.

In some embodiments, the negative electrode active material includes sodium metal or sodium alloy. Optionally, the sodium alloy includes any one of sodium-potassium alloy, sodium-potassium-lithium alloy, sodium-magnesium alloy, and sodium-zinc alloy.

A sodium metal phase or sodium alloy may be pre-deposited on the negative electrode current collector as a negative electrode active material. Alternatively, the sodium metal phase or sodium alloy may fill the pores of the porous layer of the solid electrolyte through thermal infusion. Compared with pre-depositing the sodium metal phase or sodium alloy on the negative electrode current collector as a negative electrode active material, filling the pores of the porous layer of the solid electrolyte with the sodium metal phase or sodium alloy through thermal infusion helps to reduce the nucleation overpotential and interface resistance of the battery and improve the rate performance and room-temperature/low-temperature cycling performance of the battery.

Compared with sodium metal, sodium alloy helps to reduce a melting point, reduce the nucleation overpotential, and increase a critical current density.

In some embodiments, the secondary battery is a sodium secondary battery with no negative electrode.

The sodium secondary battery with no negative electrode does not include a negative electrode active material and includes only a negative electrode current collector. During initial charging, sodium ions obtain electrons on an anode side and sodium metal deposits on a surface of the current collector to form a sodium metal phase. During discharging, the sodium metal can be converted into sodium ions that return to the positive electrode, realizing cyclic charging and discharging. Compared to sodium-ion batteries, sodium secondary batteries with no negative electrode are not limited by negative electrode materials, allowing for higher energy density.

In some embodiments, the solid electrolyte includes a conductive material, where the conductive material is located in the pores of the porous layer of the solid electrolyte on the positive electrode plate side/negative electrode plate side, and the conductive material is one or more selected from carbon nanotubes, graphite, graphene, and Super P.

The conductive material being located in the pores of the porous layer of the solid electrolyte on the negative electrode plate side helps to improve the conductibility of the porous layer and improve deposition uniformity of sodium on the negative electrode in the sodium secondary battery with no negative electrode.

In some embodiments, a CB value of the sodium secondary battery with no negative electrode is less than or equal to 0.1.

The CB value is obtained by dividing a unit area capacity of the negative electrode plate in the secondary battery by a unit area capacity of the positive electrode plate. The battery with no negative electrode does not include a negative electrode active material. Therefore, the unit area capacity of the negative electrode plate is relatively small, and the CB value of the secondary battery is less than or equal to 0.1.

In some embodiments, the negative electrode plate includes a negative electrode current collector and a primer layer disposed on at least one surface of the negative electrode current collector, where the primer layer includes one or more of carbon nanotubes, graphite, graphene, silver and carbon composite nanoparticles, and tin and carbon composite nanoparticles.

It can be understood that the negative electrode plate may include only the negative electrode current collector and include no negative electrode active material. The negative electrode plate may alternatively include sodium metal or sodium alloy as the negative electrode active material.

The primer layer not only has excellent conductibility but also facilitates uniform deposition of metal ions on the surface of the current collector, thereby improving the cycling performance and safety of the battery.

In some embodiments, the negative electrode current collector may be a metal foil or a composite current collector. For example, an aluminum foil or copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, an areal density of the primer layer is 5 g/m² to 50 g/m².

In some embodiments, the areal density of the primer layer is optionally 5 g/m², 10 g/m², 15 g/m², 20 g/m², 25 g/m², 30 g/m², 35 g/m², 40 g/m², 45 g/m², or 50 g/m².

The primer layer with an areal density of 5 g/m² to 50 g/m² facilitates uniform distribution of nucleation sites and promotes uniform deposition of metal, without affecting transport of electrons.

In some embodiments, a thickness of the primer layer is 2 µm to 100 µm.

In some embodiments, the thickness of the primer layer is optionally 2 µm, 5 µm, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, or 100 µm.

Controlling the thickness of the primer layer to be 2 µm to 100 µm can provide sufficient nucleation sites, facilitates uniform deposition of metal ions, and inhibits dendrites.

In some embodiments, the positive electrode plate, the negative electrode plate, and the solid electrolyte can be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. The soft pack may be made of plastic. As the plastic, polypropylene, polybutylene terephthalate, polybutylene succinate, and the like may be listed.

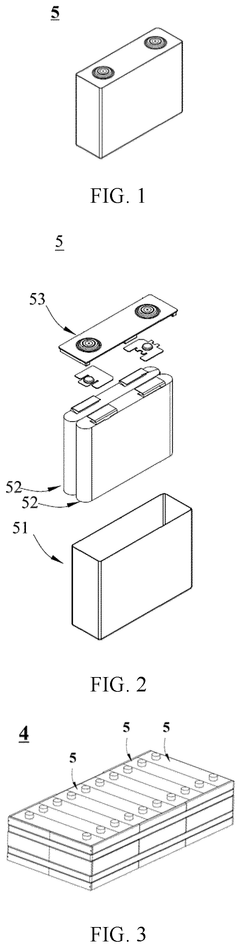

The secondary battery is not limited to any particular shape in this application, and may be cylindrical, rectangular, or of any other shapes. For example, FIG. 1 is a schematic diagram of a secondary battery 5 of a square structure as an example, and FIG. 1 is an exploded view of the secondary battery 5.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. An electrolyte solution infiltrates the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. A specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fastened using fasteners.

Optionally, the battery module 4 may further include a housing with an accommodating space, and the plurality of secondary batteries 5 are accommodated in the accommodating space.

In some embodiments, the battery module may be further assembled into a battery pack, and the battery pack may include one or more battery modules. A specific quantity may be chosen by persons skilled in the art based on use and capacity of the battery pack.

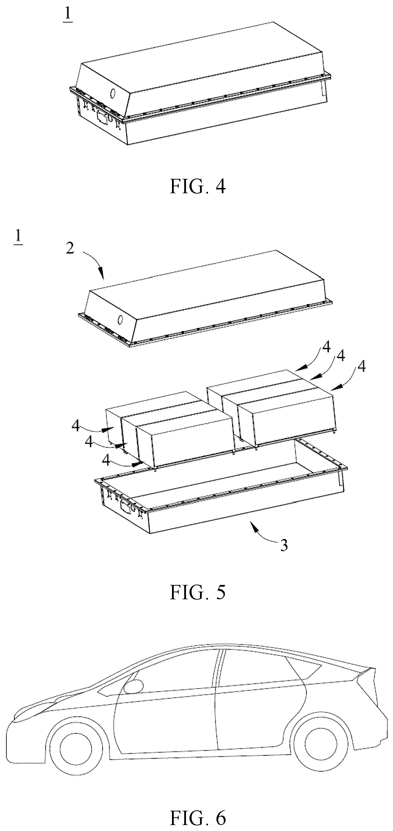

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus, or as an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a secondary battery, a battery module, or a battery pack may be selected according to requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin and may use a secondary battery as a power supply.

### Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### I. Preparation method

### Example 1

### (1) Preparation of solid electrolyte

Inorganic solid electrolyte powder Na_{3.4}Zr_{1.9}Zn_{0.1}Si_{2.2}P_{0.8}O₁₂ with a particle size of 20 µm and 20wt.% carbon black were mixed to uniformity to obtain a powder mixture; and part of the powder mixture was laid in a mold and flattened at 20 MPa to obtain a porous layer precursor.

The inorganic solid electrolyte powder Na_{3.4}Zr_{1.9}Zn_{0.1}Si_{2.2}P_{0.8}O₁₂ with a particle size of 20 µm was laid on the porous layer precursor and flattened at 20 MPa to obtain a compact layer.

The remaining powder mixture was laid on the compact layer and flattened at 20 MPa pressure to obtain a porous layer precursor.

The porous layer precursor, the compact layer, and the other porous layer precursor were flattened at 200 MPa to obtain a solid electrolyte precursor, where a mass of the compact layer accounted for 60% of a total mass of the solid electrolyte precursor.

The solid electrolyte precursor was put into a muffle furnace, maintained at a temperature of 500°C for 3 h, and then maintained at a temperature of 1000°C for 20 h to obtain a solid electrolyte of a three-layer structure.

A thickness of the compact layer was 0.4 mm, thicknesses of the porous layers on two sides of the compact layer were both 0.6 mm, and a thickness ratio of the porous layer to the compact layer was 1.5. A contact angle of molten sodium on the porous layer of the solid electrolyte was 65°, and a contact angle of molten sodium on the compact layer of the solid electrolyte was 89°.

### (2) Preparation of positive electrode plate

Carbon nanotubes and carboxymethyl cellulose (CMC) at a mass ratio of 1:0.4 were added to deionized water and stirred to form a uniform slurry; the slurry was applied onto a surface of a positive electrode current collector aluminum foil; and subsequently, the aluminum foil was transferred into a vacuum drying oven to be dried completely, and then punched to obtain a positive electrode plate with no positive electrode structure.

### (3) Preparation of negative electrode plate

Carbon nanotubes and carboxymethyl cellulose (CMC) at a mass ratio of 1:0.4 were added to deionized water and stirred to form a uniform slurry; the slurry was applied onto a surface of a negative electrode current collector copper foil; and subsequently the copper foil was transferred into a vacuum drying oven to be dried completely, and then punched to obtain a positive electrode plate with no positive electrode structure, where an areal density of the primer layer was 10 g/m², and a thickness of the primer layer was 5 µm.

### (4) Separator

A polypropylene film was used as a separator.

### (5) Preparation of battery

Carbon-coated sodium iron pyrophosphate (Na₄Fe₃(PO₄)₂P₂O₇/C) with a particle size of less than 10 µm was first dispersed in an ethylene glycol dimethyl ether solvent using an impregnation method; and then an impregnation method was used to allow the positive electrode active material carbon-coated sodium iron pyrophosphate (Na₄Fe₃(PO₄)₂P₂O₇/C) to enter the porous layer on the positive electrode side and fill the corresponding pores.

First, carbon nanotubes were dispersed in the ethylene glycol dimethyl ether solvent, then the solvent was dropwise added onto the porous layer of the solid electrolyte on the negative electrode plate side by using the impregnation method, and the porous layer was impregnated for more than 5 h and heated at 60°C, such that the carbon nanotubes could enter the porous layer of the solid electrolyte on the negative electrode side and fill the corresponding pores.

The positive electrode plate, the solid electrolyte, and the negative electrode plate were stacked sequentially and then wound to obtain a jelly roll; tabs were welded to the jelly roll; the jelly roll was packaged into an aluminum housing and baked at 80°C to remove moisture; and then the aluminum housing was sealed to obtain an uncharged battery. The uncharged battery was then sequentially subjected to processes such as standing, hot and cold pressing, formation, shaping, and capacity testing to obtain the sodium secondary battery product with no negative electrode of Example 1.

### Example 2

A preparation method of a battery of Example 2 was similar to that of the battery of Example 1, except that the type of the solid electrolyte was adjusted, where specific parameters are shown in Table 1.

### Example 3

Example 3 shows a sodium metal secondary battery whose preparation method was basically the same as that of Example 2, except that the pores of the porous layer of the solid electrolyte on the negative electrode plate side were infused with sodium metal using a thermal infusion method, where specific parameters are shown in Table 1.

### Examples 4 and 5

Examples 4 and 5 show a sodium metal secondary battery whose preparation method was basically the same as that of Example 3, except that in Example 4, the porous layer on the negative electrode side was infused with sodium-potassium-lithium alloy in which a mass ratio of sodium to potassium to lithium was 2:3:5, and in Example 5, the porous layer on the negative electrode side was infused with sodium-potassium alloy in which a mass ratio of sodium to potassium was 2:3, where specific parameters are shown in Table 1.

### Example 6

A preparation method of Example 6 was basically the same as that of Example 1, except that the type of the solid electrolyte was adjusted, where specific parameters are shown in Table 1.

### Examples 7 and 8

A preparation method of Examples 7 and 8 was basically the same as that of Example 1, except that the type of the positive electrode active material was adjusted, where in Example 8, a thickness of the coating layer was 30 nm, and specific parameters are shown in Table 1.

### Examples 9 to 11

Examples 9 to 11 show a sodium metal secondary battery whose preparation method was basically the same as that of Example 1, except that in Example 9, the pores of the porous layer of the solid electrolyte on the negative electrode plate side was infused with sodium metal using a thermal infusion method, in Example 10, the porous layer on the negative electrode side was infused with sodium-potassium-lithium alloy in which a mass ratio of sodium to potassium to lithium was 2:3:5; and in Example 11, the porous layer on the negative electrode side was infused with sodium-potassium alloy in which a mass ratio of sodium to potassium was 2:3; where specific parameters are shown in Table 1.

### Examples 12 to 19

A preparation method of Examples 12 to 19 was basically the same as that of Example 1, except that the thickness ratio of the porous layer to the compact layer or the ionic conductivity ratio of the porous layer to the compact layer was adjusted, where specific parameters are shown in Table 2.

### Example 20

A preparation method of Example 20 was basically the same as that of Example 1, except that a slurry prepared by mixing a positive electrode active material with a conductive agent was applied onto a current collector of the positive electrode plate, where specific parameters are shown in Table 1.

### Example 21

A preparation method of Example 21 was basically the same as that of Example 9, except that a slurry prepared by mixing a positive electrode active material with a conductive agent was applied onto a current collector of the positive electrode plate, where specific parameters are shown in Table 2.

### Example 22

A preparation method of Example 22 was basically the same as that of Example 10, except that a slurry prepared by mixing a positive electrode active material with a conductive agent was applied onto a current collector of the positive electrode plate, where specific parameters are shown in Table 2.

### Example 23

A preparation method of Example 23 was basically the same as that of Example 11, except that a slurry prepared by mixing a positive electrode active material with a conductive agent was applied onto a current collector of the positive electrode plate, where specific parameters are shown in Table 2.

### Examples 24 to 27

A preparation method of Examples 24 to 27 was basically the same as that of Example 1, except that the solid electrolyte in Examples 24 to 27 was provided with the porous layer on only one side of the compact layer, that was, the solid electrolyte included only the porous layer on the positive electrode plate side, the positive electrode active material was distributed in the porous layer, the thicknesses of the porous layer and the compact layer were the same as the thickness of each layer of the solid electrolyte in Example 1, and the negative electrode plate and the compact layer of the solid electrolyte were assembled with contact, where specific parameters are shown in Table 2.

### Comparative examples 1 to 8

A preparation method of a battery in Comparative examples 1 to 8 was basically the same as that of Example 1, except that the solid electrolyte included only one compact layer, and the thickness of the compact layer was the same as the thickness of the compact layer of the solid electrolyte in Example 1.

### II. Performance test

### 1. Solid electrolyte

### (1) Conductivity of sodium ions

A porous layer sheet and a compact layer sheet were respectively subjected to an electrochemical alternating-current impedance test. Ohmic impedance of a button cell (whose electrode plates on positive and negative electrode sides are platinum or titanium sheets with a same area) was measured at 25°C using a 1470 multi-channel electrochemical workstation from Solartron in UK, where a frequency range was 1 Hz to 1 MHz, a perturbation signal was 5 mV, and ionic conductivity=(thickness of solid electrolyte)/(area of platinum or titanium sheet×ohmic impedance of solid electrolyte). Test processes of the comparative examples and other examples were the same as above.

### (2) Contact angle test

Molten sodium was dropwise added to the surface of the solid electrolyte, then an image of the surface of the electrolyte was taken using a high-resolution camera (Grasshopper GRAS-50S5M-C) equipped with a Fujinon HF75SA-1 lens, and a contact angle was measured using ImageJ software. Test processes of the comparative examples and other examples were the same as above.

### 2. Battery performance test

### (1) Nucleation overpotential test

A nucleation overpotential test process was as follows: At 25°C, in a three-electrode battery system, an aluminum current collector coated with carbon nanotubes was used as a working electrode, a sodium metal sheet was used as a counter electrode, another sodium metal sheet was used as a reference electrode, the battery was discharged to 0.3 mAh/cm² at a constant current of 0.1 mA/cm², and the most negative potential obtained in this process was recorded as a nucleation overpotential. Test processes of the comparative examples and other examples were the same as above.

### (2) Room-temperature/low-temperature cycling performance test

A room-temperature/low-temperature cycling performance test was as follows: At 25°C/-10°C, the prepared battery was charged to 3.7 V (a carbon-coated sodium iron pyrophosphate positive electrode material) or to 4.0 V (a layered transition metal oxide positive electrode material) at a constant current of 1C, and then discharged to 2.5 V at 1C, and a capacity obtained was recorded as an initial capacity (C0). The foregoing battery was repeatedly subjected to the above steps, and simultaneously a discharge capacity (Cn) of the battery after the n-th cycle was recorded, where a capacity retention rate of the battery after each cycle was calculated as Pn=Cn/C0×100%, and the number of cycles of the battery was recorded when Pn dropped to 80%. Test processes of the comparative examples and other examples were the same as above.

### (3) Interface resistance test

An interface resistance test process was as follows: An assembled full battery was subjected to an electrochemical alternating-current impedance test. At 25°C, an alternating-current impedance spectrum of the full battery was measured using a 1470 multi-channel electrochemical workstation from Solartron in UK, where a frequency range was 1 Hz to 1 MHz, and a perturbation signal was 5 mV. After the relevant electrochemical impedance spectrum was obtained, fitting was performed using Zview software, and a diameter obtained by fitting an arc whose impedance tolerance value was between 1×10⁻⁷ and 1×10⁻⁵ was taken as an interface resistance. Test processes of the comparative examples and other examples were the same as above.

### (4) Rate performance test

A rate performance test was as follows: At 25°C, the prepared battery was placed into a thermostat at 25°C, and left standing for 4 h until the battery reached a constant temperature; the battery that reached a constant temperature was charged to 3.7 V/4 V at a constant current of 1C at 25°C, discharged to 2.5 V at a constant current of 1C, subjected to 5 cycles, and left standing for 5 min; subsequently, the battery was charged to 3.7 V/4 V at a constant current of 2C, subjected to 5 cycles, left standing for 5 min, discharged to 2.5 V at a constant current of 2C, and left standing for 5 min, to obtain a discharge capacity C2 at 2C; and afterwards, the charge/discharge current was continuously increased to nC, a corresponding discharge capacity was recorded as Cn, and a value of the charge/discharge current when a rate R (R=C1/Cn×100%) was as high as or below 50% was recorded.

### III. Analysis of testing results of examples and comparative examples

The batteries of the examples and comparative examples were prepared according to the foregoing methods, and performance parameters were measured. Results are shown in Table 1, Table 2, and Table 3.

**Table 1**

| No. | Solid electrolyte | | | |
|---|---|---|---|---|
| | Inorganic solid electrolyte powder | Porous layer on positive electrode side | Porous layer on negative electrode side | Thickness ratio of porous layer to compact layer |
| Example 1 | Na_{3.4}Zr_{1.9}Zn_{0.1}Si_{2.2}P_{0.8}O₁₂ | Na₄Fe₃(PO₄)₂P₂O₇/C | CNT | 1.5 |
| Example 2 | β-Na₂0 11Al₂O₃ | Na₄Fe₃(PO₄)₂P₂O₇/C | CNT | 1.5 |
| Example 3 | β-Na₂0 11Al₂O₃ | Na₄Fe₃(PO₄)₂P₂O₇/C | With sodium metal | 1.5 |
| Example 4 | β-Na₂0 11Al₂O₃ | Na₄Fe₃(PO₄)₂P₂O₇/C | With sodium-potassium-lithium alloy (mass ratio: 2:3:5) | 1.5 |
| Example 5 | β-Na₂0 11Al₂O₃ | Na₄Fe₃(PO₄)₂P₂O₇/C | With sodium-potassium alloy (mass ratio: 2:3) | 1.5 |
| Example 6 | Na₁₁Sn₂PS₁₂ | Na₄Fe₃(PO₄)₂P₂O₇/C | CNT | 1.5 |
| Example 7 | Na_{3.4}Zr_{1.9}Zn_{0.1}Si_{2.2}P_{0.8}O₁₂ | Na[Cu_{1/9}Ni_{2/9}Fe_{1/3}Mn_{1/3}Mn_{1/3}]O₂ | CNT | 1.5 |
| Example 8 | Na_{3.4}Zr_{1.9}Zn_{0.1}Si_{2.2}P_{0.8}O₁₂ | Na_{2/3}Ni_{1/6}Mn_{2/3}Cu_{1/9}Mg_{1/18}O₂ coated with ZrO₂ or TiO₂ | CNT | 1.5 |
| Example 9 | Na_{3.4}Zr_{1.9}Zn_{0.1}Si_{2.2}P_{0.8}O₁₂ | Na₄Fe₃(PO₄)₂P₂O₇/C | With sodium metal | 1.5 |
| Example 10 | Na_{3.4}Zr_{1.9}Zn_{0.1}Si_{2.2}P_{0.8}O₁₂ | Na₄Fe₃(PO₄)₂P₂O₇/C | With sodium-potassium-lithium alloy (mass ratio: 2:3:5) | 1.5 |
| Example 11 | Na_{3.4}Zr_{1.9}Zn_{0.1}Si_{2.2}P_{0.8}O₁₂ | Na₄Fe₃(PO₄)₂P₂O₇/C | With sodium-potassium alloy (mass ratio: 2:3) | 1.5 |
| Example 12 | Na_{3.4}Zr_{1.9}Zn_{0.1}Si_{2.2}P_{0.8}O₁₂ | Na₄Fe₃(PO₄)₂P₂O₇/C | CNT | 0.5 |
| Example 13 | Na_{3.4}Zr_{1.9}Zn_{0.1}Si_{2.2}P_{0.8}O₁₂ | Na₄Fe₃(PO₄)₂P₂O₇/C | CNT | 1 |
| Example 14 | Na_{3.4}Zr_{1.9}Zn_{0.1}Si_{2.2}P_{0.8}O₁₂ | Na₄Fe₃(PO₄)₂P₂O₇/C | CNT | 4 |
| Example 15 | Na_{3.4}Zr_{1.9}Zn_{0.1}Si_{2.2}P_{0.8}O₁₂ | Na₄Fe₃(PO₄)₂P₂O₇/C | CNT | 7.5 |
| Example 16 | Na_{3.4}Zr_{1.9}Zn_{0.1}Si_{2.2}P_{0.8}O₁₂ | Na₄Fe₃(PO₄)₂P₂O₇/C | CNT | 1.5 |
| Example 17 | Na_{3.4}Zr_{1.9}Zn_{0.1}Si_{2.2}P_{0.8}O₁₂ | Na₄Fe₃(PO₄)₂P₂O₇/C | CNT | 1.5 |
| Example 18 | Na_{3.4}Zr_{1.9}Zn_{0.1}Si_{2.2}P_{0.8}O₁₂ | Na₄Fe₃(PO₄)₂P₂O₇/C | CNT | 1.5 |
| Example 19 | Na_{3.4}Zr_{1.9}Zn_{0.1}Si_{2.2}P_{0.8}O₁₂ | Na₄Fe₃(PO₄)₂P₂O₇/C | CNT | 1.5 |
| Example 20 | Na_{3.4}Zr_{1.9}Zn_{0.1}Si_{2.2}P_{0.8}O₁₂ | CNT | CNT | 1.5 |
| Example 21 | Na_{3.4}Zr_{1.9}Zn_{0.1}Si_{2.2}P_{0.8}O₁₂ | CNT | With sodium metal | 1.5 |
| Example 22 | Na_{3.4}Zr_{1.9}Zn_{0.1}Si_{2.2}P_{0.8}O₁₂ | CNT | With sodium-potassium-lithium alloy (mass ratio: 2:3:5) | 1.5 |
| Example 23 | Na_{3.4}Zr_{1.9}Zn_{0.1}Si_{2.2}P_{0.8}O₁₂ | CNT | With sodium-potassium alloy (mass ratio: 2:3) | 1.5 |
| Example 24 | Na_{3.4}Zr_{1.9}Zn_{0.1}Si_{2.2}P_{0.8}O₁₂ | Na₄Fe₃(PO₄)₂P₂O₇/C | None | 1.5 |
| Example 25 | Na_{3.4}Zr_{1.9}Zn_{0.1}Si_{2.2}P_{0.8}O₁₂ | Na₄Fe₃(PO₄)₂P₂O₇/C | None | 1.5 |
| Example 26 | Na_{3.4}Zr_{1.9}Zn_{0.1}Si_{2.2}P_{0.8}O₁₂ | Na₄Fe₃(PO₄)₂P₂O₇/C | None | 1.5 |
| Example 27 | Na_{3.4}Zr_{1.9}Zn_{0.1}Si_{2.2}P_{0.8}O₁₂ | Na₄Fe₃(PO₄)₂P₂O₇/C | None | 1.5 |
| Comparative example 1 | Na_{3.4}Zn_{1.9}Zn_{0.1}Si_{2.2}P_{0.8}O₁₂ | None | None | 1.5 |
| Comparative example 2 | β-Na₂O 11Al₂O₃ | None | None | 1.5 |
| Comparative example 3 | Na₁₁Sn₂PS₁₂ | None | None | 1.5 |
| Comparative example 4 | Na_{3.4}Zr_{1.9}Zn_{0.1}Si_{2.2}P_{0.8}O₁₂ | None | None | 1.5 |
| Comparative example 5 | Na_{3.4}Zr_{1.9}Zn_{0.1}Si_{2.2}P_{0.8}O₁₂ | None | None | 1.5 |
| Comparative example 6 | Na_{3.4}Zr_{1.9}Zn_{0.1}Si_{2.2}P_{0.8}O₁₂ | None | None | 1.5 |
| Comparative example 7 | Na_{3.4}Zr_{1.9}Zn_{0.1}Si_{2.2}P_{0.8}O₁₂ | None | None | 1.5 |
| Comparative example 8 | Na_{3.4}Zr_{1.9}Zn_{0.1}Si_{2.2}P_{0.8}O₁₂ | None | None | 1.5 |

**Table 2**

| No. | Battery | | | | | |
|---|---|---|---|---|---|---|
| | Negative electrode plate | | | Positive electrode plate | | |
| | Whether metal is pre-deposited | Whether primer layer is included | Whether current collector is included | Positive electrode active material | Whether primer layer is included | Whether current collector is included |
| Example 1 | / | Yes | Yes | / | Yes | Yes |
| Example 2 | / | Yes | Yes | / | Yes | Yes |
| Example 3 | / | Yes | Yes | / | Yes | Yes |
| Example 4 | / | Yes | Yes | / | Yes | Yes |
| Example 5 | / | Yes | Yes | / | Yes | Yes |
| Example 6 | / | Yes | Yes | / | Yes | Yes |
| Example 7 | / | Yes | Yes | / | Yes | Yes |
| Example 8 | / | Yes | Yes | / | Yes | Yes |
| Example 9 | / | Yes | Yes | / | Yes | Yes |
| Example 10 | / | Yes | Yes | / | Yes | Yes |
| Example 11 | / | Yes | Yes | / | Yes | Yes |
| Example 12 | / | Yes | Yes | / | Yes | Yes |
| Example 13 | / | Yes | Yes | / | Yes | Yes |
| Example 14 | / | Yes | Yes | / | Yes | Yes |
| Example 15 | / | Yes | Yes | / | Yes | Yes |
| Example 16 | / | Yes | Yes | / | Yes | Yes |
| Example 17 | / | Yes | Yes | / | Yes | Yes |
| Example 18 | / | Yes | Yes | / | Yes | Yes |
| Example 19 | / | Yes | Yes | / | Yes | Yes |
| Example 20 | / | Yes | Yes | Na₄Fe₃(PO₄)₂P₂O₇/C | Yes | Yes |
| Example 21 | / | Yes | Yes | Na₄Fe₃(PO₄)₂P₂O₇/C | Yes | Yes |
| Example 22 | / | Yes | Yes | Na₄Fe₃(PO₄)₂P₂O₇/C | Yes | Yes |
| Example 23 | / | Yes | Yes | Na₄Fe₃(PO₄)₂P₂O₇/C | Yes | Yes |
| Example 24 | / | Yes | Yes | / | Yes | Yes |
| Example 25 | Sodium metal is pre-deposited | Yes | Yes | / | Yes | Yes |
| Example 26 | Sodium-potassium-lithium alloy (mass ratio: 2:3:5) is pre-deposited | Yes | Yes | / | Yes | Yes |
| Example 27 | Sodium-potassium alloy (mass ratio: 2:3) is pre-deposited | Yes | Yes | / | Yes | Yes |
| Comparative example 1 | / | Yes | Yes | Na₄Fe₃(PO₄)₂P₂O₇ | Yes | Yes |
| Comparative example 2 | / | Yes | Yes | Na₄Fe₃(PO₄)₂P₂O₇ | Yes | Yes |
| Comparative example 3 | / | Yes | Yes | Na₄Fe₃(PO₄)₂P₂O₇ | Yes | Yes |
| Comparative example 4 | / | Yes | Yes | Na[Cu_{1/9}Ni_{2/9}Fe_{1/3}Mn_{1/3}]O₂ | Yes | Yes |
| Comparative example 5 | / | Yes | Yes | Na_{2/3}Ni_{1/6}Mn_{2/3}Cu_{1/9}Mg_{1/18}O₂ coated with ZrO₂ or TiO₂ | Yes | Yes |
| Comparative example 6 | Sodium metal is pre-deposited | Yes | Yes | Na₄Fe₃(PO₄)₂P₂O₇ | Yes | Yes |
| Comparative example 7 | Sodium-potassium-lithium alloy (mass ratio: 2:3:5) is pre-deposited | Yes | Yes | Na₄Fe₃(PO₄)₂P₂O₇ | Yes | Yes |
| Comparative example 8 | Sodium-potassium alloy (mass ratio: 2:3) is pre-deposited | Yes | Yes | Na₄Fe₃(PO₄)₂P₂O₇ | Yes | Yes |

**Table 3**

| No. | Battery | | | | | | | |
|---|---|---|---|---|---|---|---|---|
| | Ionic conductivity ratio of porous layer to compact layer | Ionic conductivity of compact layer (S cm⁻¹) | Ionic conductivity of porous layer (S cm⁻¹) | Nucleation overpotential (mV) | Cycles (number) at 80% of capacity | | Interface resistance (Ω) | Charge/discharge rate at 50% of discharge capacity at 1C |
| | | | | | 25°C | -10°C | | |
| Example 1 | 0.35 | 5.1x10⁻³ | 1.8x10⁻³ | 67 | 210 | 130 | 78 | 5C |
| Example 2 | 0.32 | 2.4x10⁻³ | 7.6x10⁻⁴ | 98 | 150 | 100 | 101 | 3C |
| Example 3 | 0.32 | 2.4x10⁻³ | 7.6x10⁻⁴ | 59 | 250 | 120 | 84 | 4C |
| Example 4 | 0.32 | 2.4x10⁻³ | 7.6x10⁻⁴ | 47 | 280 | 150 | 72 | 4C |
| Example 5 | 0.32 | 2.4x10⁻³ | 7.6x10⁻⁴ | 36 | 300 | 180 | 63 | 5C |
| Example 6 | 0.28 | 2.8x10⁻³ | 7.7x10⁻⁴ | 72 | 100 | 70 | 69 | 5C |
| Example 7 | 0.35 | 5.1x10⁻³ | 1.8x10⁻³ | 67 | 170 | 80 | 82 | 4C |
| Example 8 | 0.35 | 5.1x10⁻³ | 1.8x10⁻³ | 67 | 200 | 100 | 91 | 4C |
| Example 9 | 0.35 | 5.1x10⁻³ | 1.8x10⁻³ | 32 | 360 | 170 | 57 | 6C |
| Example 10 | 0.35 | 5.1x10⁻³ | 1.8x10⁻³ | 21 | 500 | 280 | 33 | 7C |
| Example 11 | 0.35 | 5.1x10⁻³ | 1.8x10⁻³ | 16 | 550 | 350 | 24 | 7C |
| Example 12 | 0.35 | 5.1x10⁻³ | 1.8x10⁻³ | 71 | 180 | 110 | 85 | 4C |
| Example 13 | 0.35 | 5.1x10⁻³ | 1.8x10⁻³ | 93 | 160 | 90 | 92 | 4C |
| Example 14 | 0.35 | 5.1x10⁻³ | 1.8x10⁻³ | 52 | 150 | 110 | 58 | 6C |
| Example 15 | 0.35 | 5.1x10⁻³ | 1.8x10⁻³ | 40 | 100 | 80 | 39 | 7C |
| Example 16 | 0.1 | 5.1x10⁻³ | 5.1x10⁻⁴ | 48 | 180 | 130 | 67 | 6C |
| Example 17 | 0.5 | 5.1x10⁻³ | 2.5x10⁻³ | 70 | 210 | 110 | 84 | 4C |
| Example 18 | 0.7 | 5.1x10⁻³ | 3.5x10⁻³ | 154 | 170 | 100 | 95 | 3C |
| Example 19 | 0.9 | 5.1x10⁻³ | 4.5x10⁻³ | 188 | 170 | 90 | 122 | 3C |
| Example 20 | 0.35 | 5.1x10⁻³ | 1.8x10⁻³ | 67 | 180 | 110 | 90 | 4C |
| Example 21 | 0.35 | 5.1x10⁻³ | 1.8x10⁻³ | 32 | 210 | 140 | 82 | 5C |
| Example 22 | 0.35 | 5.1x10⁻³ | 1.8x10⁻³ | 21 | 240 | 150 | 77 | 5C |
| Example 23 | 0.35 | 5.1x10⁻³ | 1.8x10⁻³ | 16 | 260 | 160 | 70 | 5C |
| Example 24 | 0.35 | 5.1x10⁻³ | 1.8x10⁻³ | 123 | 160 | 90 | 138 | 3C |
| Example 25 | 0.35 | 5.1x10⁻³ | 1.8x10⁻³ | 56 | 190 | 140 | 80 | 4C |
| Example 26 | 0.35 | 5.1x10⁻³ | 1.8x10⁻³ | 42 | 230 | 170 | 69 | 4C |
| Example 27 | 0.35 | 5.1x10⁻³ | 1.8x10⁻³ | 39 | 250 | 190 | 54 | 5C |
| Comparative example 1 | None | 5.1x10⁻³ | \ | 204 | 100 | 60 | 584 | 2C |
| Comparative example 2 | None | 2.4x10⁻³ | \ | 347 | 70 | 30 | 1038 | 2C |
| Comparative example 3 | None | 2.8x10⁻³ | \ | 254 | 50 | 20 | 870 | 2C |
| Comparative example 4 | None | 5.1x10⁻³ | \ | 204 | 80 | 50 | 515 | 2C |
| Comparative example 5 | None | 5.1x10⁻³ | \ | 204 | 90 | 60 | 607 | 2C |
| Comparative example 6 | None | 5.1x10⁻³ | \ | 56 | 130 | 70 | 256 | 2C |
| Comparative example 7 | None | 5.1x10⁻³ | \ | 42 | 150 | 90 | 203 | 2C |
| Comparative example 8 | None | 5.1X10⁻³ | \ | 39 | 180 | 100 | 187 | 3C |

It can be seen from the above results that the solid electrolytes for secondary batteries in Examples 1 to 27 each include a compact layer and a porous layer located on at least one side of the compact layer, and the porosity of the porous layer is greater than the porosity of the compact layer. From the comparison between Examples 1, 12, 20 and 24 and Comparative example 1, the comparison between Example 2 and Comparative example 2, the comparison between Example 6 and Comparative example 3, the comparison between Example 7 and Comparative example 4, the comparison between Example 8 and Comparative example 5, the comparison between Examples 9, 21 and 25 and Comparative example 6, the comparison between Examples 10, 22 and 26 and Comparative example 7, and the comparison between Examples 11, 23 and 27 and Comparative example 8, it can be seen that compared with a traditional solid electrolyte that includes only one compact layer, the solid electrolyte in this application that includes a compact layer and a porous layer located on at least one side of the compact layer helps to increase the number of cycles when the capacity of the battery reaches 80% at 25°C and -10°C, reduce the interface resistance of the battery, increase the charge/discharge rate at 50% of the discharge capacity at 1C, improve the electrical properties of the battery, and widen the application range of the battery.

From the comparison between Examples 1, 12, 20 and 24 and Comparative example 1, the comparison between Example 2 and Comparative example 2, the comparison between Example 6 and Comparative example 3, the comparison between Example 7 and Comparative example 4, and the comparison between Example 8 and Comparative example 5, it can be seen that for a sodium secondary battery with no negative electrode, compared with a traditional solid electrolyte that includes only one compact layer, the solid electrolyte in this application that includes a compact layer and a porous layer located on at least one side of the compact layer helps to reduce the nucleation overpotential of the battery, increase the number of cycles when the capacity of the battery reaches 80% at 25°C and -10°C, significantly reduce the interface resistance of the battery, and increase the charge/discharge rate at 50% of the discharge capacity at 1C.

From the comparison between Examples 9, 21 and 25 and Comparative example 6, the comparison between Examples 10, 22 and 26 and Comparative example 7, and the comparison between Examples 11, 23 and 27 and Comparative example 8, it can be seen that for a sodium secondary battery, compared with a traditional solid electrolyte that includes only one compact layer, the solid electrolyte in this application that includes a compact layer and a porous layer located on at least one side of the compact layer helps to significantly increase the number of cycles when the capacity of the battery reaches 80% at 25°C and -10°C, reduce the interface resistance of the battery, and significantly increase the charge/discharge rate at 50% of the discharge capacity at 1C.

From the comparison between Example 1 and Examples 2 and 6, it can be seen that compared with an inorganic solid electrolyte material including β-Na₂O·11Al₂O₃ or Na₁₁Sn₂P₂S₁₂, the inorganic solid electrolyte material including Na_{3.4}M_{1.9}M'_{0.1}Si_{2.2}P_{0.8}O₁₂ further helps to reduce the nucleation overpotential of the battery and increase the number of cycles when the capacity of the battery reaches 80% at 25°C and -10°C.

From the comparison between Example 1 and Examples 7 and 8, it can be seen that compared with using Na_{2/3}Ni_{1/6}Mn_{2/3}Cu_{1/9}Mg_{1/18}O₂ or Na(Cu_{1/9}Ni_{2/9}Fe_{1/3}Mn_{1/3})O₂ coated with ZrO₂ or TiO₂ as the positive electrode active material, using Na₄Fe₃(PO₄)₂P₂O₇ as the positive electrode active material helps to increase the number of cycles when the capacity of the battery reaches 80% at 25°C and -10°C, reduce the interface resistance of the battery, and increase the charge/discharge rate at 50% of the discharge capacity at 1C.

From the comparison between Example 8 and Example 7, it can be seen that compared with using Na(Cu_{1/9}Ni_{2/9}Fe_{1/3}Mn_{1/3})O₂ as the positive electrode active material, using Na_{2/3}Ni_{1/6}Mn_{2/3}Cu_{1/9}Mg_{1/18}O₂ coated with ZrO₂ or TiO₂ as the positive electrode active material helps to increase the number of cycles when the capacity of the battery reaches 80% at 25°C and -10°C.

From the comparison between Example 1 and Example 24, the comparison between Example 9 and Example 25, the comparison between Example 10 and Example 26, the comparison between Example 11 and Example 27, it can be seen that for a sodium secondary battery with no negative electrode or a sodium metal secondary battery, compared with a solid electrolyte that includes a compact layer and a porous layer located on a positive electrode plate side, the solid electrolyte that includes a compact layer, a porous layer located on a positive electrode plate side and a porous layer located on a negative electrode plate side helps to reduce the nucleation overpotential of the battery, increase the number of cycles when the capacity of the battery reaches 80% at 25°C and -10°C, reduce the interface resistance of the battery, and increase the charge/discharge rate at 50% of the discharge capacity at 1C.

From the comparison between Examples 4 and 5 and Example 3, the comparison between Examples 10 and 11 and Example 9, the comparison between Examples 22 and 23 and Example 21, and the comparison between Examples 26 and 27 and Example 25, it can be seen that compared with using sodium metal as the negative electrode active material, using sodium-potassium-lithium alloy or sodium-potassium alloy as the negative electrode active material helps to reduce the nucleation overpotential of the battery, increase the number of cycles when the capacity of the battery reaches 80% at 25°C and -10°C, and reduce the interface resistance of the battery.

From the comparison between Example 9 and Example 3, the comparison between Example 10 and Example 4, and the comparison between Example 111 and Example 5, it can be seen that for a sodium metal secondary battery, compared with an inorganic solid electrolyte material including β-Na₂O·11Al₂O₃, the inorganic solid electrolyte material including Na_{3.4}M_{1.9}M'_{0.1}Si_{2.2}P_{0.8}O₁₂ further helps to reduce the nucleation overpotential of the battery, increase the number of cycles when the capacity of the battery reaches 80% at 25°C and -10°C, reduce the interface resistance of the battery, and increase the charge/discharge rate at 50% of the discharge capacity at 1C.

From the comparison between Example 1 and Example 20, the comparison between Example 9 and Example 21, the comparison between Example 10 and Example 22, and the comparison between Example 111 and Example 23, it can be seen that for a sodium metal secondary battery, compared with a manner in which the positive electrode slurry is prepared from a positive electrode active material Na_{3.4}M_{1.9}M'_{0.1}Si_{2.2}P_{0.8}O₁₂ and a conductive agent and applied onto a current collector, the manner in which the pores of the porous layer in contact with the positive electrode plate are filled with a positive electrode active material Na_{3.4}M_{1.9}M'_{0.1}Si_{2.2}P_{0.8}O₁₂ further helps to increase the number of cycles when the capacity of the battery reaches 80% at 25°C and -10°C, reduce the interface resistance of the battery, and increase the charge/discharge rate at 50% of the discharge capacity at 1C.

From the comparison between Examples 12 to 15 and Comparative example 1, it can be seen that controlling the thickness ratio of any one of the porous layers to the compact layer to be 0.5 to 7.5 helps to reduce the nucleation overpotential of the battery, increase the number of cycles when the capacity of the battery reaches 80% at 25°C and -10°C, reduce the interface resistance of the battery, and increase the charge/discharge rate at 50% of the discharge capacity at 1C. From the comparison between Examples 13 and 14 and Examples 12 and 15, it can be seen that further controlling the thickness ratio of any one of the porous layers to the compact layer to be 1 to 4 can balance the interface resistance and the cycling performance of the battery.

From the comparison between Examples 16 to 19 and Comparative example 1, it can be seen that controlling the ionic conductivity of the porous layer to be not less than 1/10 of the ionic conductivity of the compact layer helps to reduce the nucleation overpotential of the battery, increase the number of cycles when the capacity of the battery reaches 80% at 25°C and -10°C, reduce the interface resistance of the battery, and increase the charge/discharge rate at 50% of the discharge capacity at 1C.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A solid electrolyte for a secondary battery, **characterized by** comprising a compact layer and a porous layer located on at least one side of the compact layer, wherein a porosity of the porous layer is greater than a porosity of the compact layer.

2. The solid electrolyte according to claim 1, **characterized in that** the porous layer is disposed on a surface of the compact layer.

3. The solid electrolyte according to claim 1 or 2, **characterized in that** two porous layers are provided and are respectively connected to two opposite surfaces of the compact layer.

4. The solid electrolyte according to any one of claims 1 to 3, **characterized in that** a thickness ratio of any one of the porous layers to the compact layer is 0.5 to 7.5, optionally 1 to 4.

5. The solid electrolyte according to any one of claims 1 to 4, **characterized in that** an ionic conductivity of the porous layer is not less than 1/10 of an ionic conductivity of the compact layer.

6. The solid electrolyte according to any one of claims 1 to 5, **characterized in that** a contact angle of molten sodium on a surface of the porous layer of the solid electrolyte is ≤ 90°, optionally ≤ 70°.

7. The solid electrolyte according to any one of claims 1 to 6, **characterized in that** the compact layer and the porous layer both comprise an inorganic solid electrolyte material, wherein the inorganic solid electrolyte material comprises one or more of a sulfur-based electrolyte, a sodium superionic conductor, and an oxide electrolyte.

8. The solid electrolyte according to claim 7, **characterized in that** the sulfur-based electrolyte comprises one or more of Na₂S-P₂S₅, Na₁₁Sn₂PnX₁₂, and Na₃Pn_{y}Pn'_{1-y}X_{z}X'_{4-z}, wherein Pn comprises at least one of P and Sb, X comprises at least one of S and Se, Pn' comprises at least one of Si, Sn, and Ge, X' comprises at least one of F, Br, and Cl, 0<y≤1, and 0<z≤4;
the sodium superionic conductor comprises Na₃₊ₓM_{y}M'_{2-y}Si_{2-z}P_{z}O₁₂, wherein M and M' each independently comprise at least one of Zr, Ca, Mg, Zn, La, Ti, and Nb, 0≤x≤1, 0<y≤2, and 0≤z<2; and
the oxide electrolyte comprises at least one of Na-β-Al₂O₃ and Na-β"-Al₂O₃, wherein Na-β-Al₂O₃ comprises β-Na₂O·11Al₂O₃, and Na-β"-Al₂O₃ comprises β"-Na₂O·5Al₂O₃; and optionally, the oxide electrolyte further comprises an inorganic oxide, wherein the inorganic oxide comprises one or more of Li₂O, MgO, TiO₂, ZrO₂, Y₂O₃, MnO₂, SiO₂, and Fe₂O₃, and a mass percentage of the inorganic oxide is 0.5% to 30% based on a total mass of the oxide electrolyte.

9. A preparation method of a solid electrolyte for a secondary battery, **characterized by** comprising the following steps:
performing first compaction: mixing inorganic solid electrolyte powder with a pore forming agent, and performing compaction to obtain a porous layer precursor;
performing second compaction: compacting the inorganic solid electrolyte powder to obtain a compact layer;
performing third compaction: compacting the porous layer precursor and the compact layer that are stacked sequentially, to obtain a solid electrolyte precursor; and
calcining the solid electrolyte precursor to obtain the solid electrolyte, wherein the porous layer precursor is formed into a porous layer, and a porosity of the porous layer is greater than a porosity of the compact layer.

10. The preparation method of a solid electrolyte according to claim 9, **characterized in that** the pore forming agent comprises one or more of activated carbon, carbon black, ethyl cellulose, starch, ammonium carbonate, ammonium bicarbonate, polyethylene glycol, polymethacrylic acid, and polymethyl methacrylate.

11. The preparation method of a solid electrolyte according to claim 9 or 10, **characterized in that** a mass percentage of the pore forming agent is 5% to 50% based on a total mass of the porous layer precursor.

12. The preparation method of a solid electrolyte according to any one of claims 9 to 11, **characterized in that** a mass percentage of the compact layer is 30% to 70% based on a total mass of the solid electrolyte precursor, optionally 50% to 70%.

13. The preparation method of a solid electrolyte according to any one of claims 9 to 12, **characterized in that** conditions for the calcining comprise: the calcining is first maintained at a temperature of 400°C to 600°C for 0.5 h to 4 h and then maintained at a temperature of 800°C to 1300°C for 0.5 h to 24 h.

14. The preparation method of a solid electrolyte according to any one of claims 9 to 13, **characterized in that** the first compaction and the second compaction are both performed at a pressure of 10 MPa to 50 MPa, and the third compaction is performed at a pressure of 50 MPa to 300 MPa.

15. The preparation method of a solid electrolyte according to any one of claims 9 to 14, **characterized in that** a particle size of the inorganic solid electrolyte powder is 1 µm to 10 µm.

16. A secondary battery, **characterized by** comprising a positive electrode plate, a negative electrode plate, and the solid electrolyte according to any one of claims 1 to 8 or a solid electrolyte prepared using the preparation method of a solid electrolyte according to any one of claims 9 to 15.

17. The secondary battery according to claim 16, **characterized in that** the secondary battery comprises a positive electrode active material, wherein the positive electrode active material is located in pores of a porous layer of the solid electrolyte on a positive electrode plate side.

18. The secondary battery according to claim 17, **characterized in that** the positive electrode active material is synthesized in situ in the porous layer of the solid electrolyte, wherein a method for the in-situ synthesis comprises at least one of a hydrothermal method, an electrodeposition method, a sol-gel method, an electrospinning method, a chemical vapor deposition method, a physical vapor deposition method, and an impregnation method, and the physical vapor deposition method comprises at least one of vacuum evaporation, magnetron sputtering, ion sputtering, molecular beam epitaxy, and atomic layer deposition.

19. The secondary battery according to claim 17 or 18, **characterized in that** the positive electrode active material comprises at least one of a layered transition metal oxide, a polyanionic compound, and a Prussian blue compound, and optionally comprises one or more of NaNi_{1/3}Fe_{1/3}Mn_{1/3}O₂, Na(Cu_{1/9}Ni_{2/9}Fe_{1/3}Mn_{1/3})O₂, Na_{2/3}Ni_{1/6}Mn_{2/3}Cu_{1/9}Mg_{1/18}O₂, Na₄Fe₃(PO₄)₂P₂O₇, NaFePO₄, Na₃V₂(PO₄)₃, Na_{1.9}CoFe(CN)₆, Na₂NiFe(CN)₆, and NaMnFe(CN)₆.

20. The secondary battery according to any one of claims 17 to 19, **characterized in that** a coating layer is provided on a surface of the positive electrode active material, wherein the coating layer comprises one or more of carbon material, ZrO₂, TiO₂, polyaniline, polypyrrole, poly(3,4-ethylenedioxythiophene), aluminum oxide, zinc oxide, titanium oxide, zirconium oxide, magnesium oxide, silicon oxide, lanthanum oxide, sodium fluoride, lithium fluoride, and aluminum fluoride, wherein the carbon material comprises one or more of amorphous carbon, graphite, and graphene.

21. The secondary battery according to claim 20, **characterized in that** a thickness of the coating layer is 2 nm to 1000 nm, optionally 10 nm to 100 nm.

22. The secondary battery according to any one of claims 16 to 21, **characterized in that** the secondary battery comprises a negative electrode active material, wherein the negative electrode active material is located in the pores of the porous layer of the solid electrolyte on a negative electrode plate side.

23. The secondary battery according to claim 22, **characterized in that** the negative electrode active material fills the pores of the porous layer of the solid electrolyte through thermal infusion.

24. The secondary battery according to claim 22 or 23, **characterized in that** the negative electrode active material comprises sodium metal or sodium alloy, and optionally the sodium alloy comprises any one of sodium-potassium alloy, sodium-potassium-lithium alloy, sodium-magnesium alloy, and sodium-zinc alloy.

25. The secondary battery according to any one of claims 16 to 23, **characterized in that** the secondary battery is a sodium secondary battery with no negative electrode.

26. The secondary battery according to any one of claims 16 to 25, **characterized in that** the solid electrolyte comprises a conductive material, wherein the conductive material is located in the pores of the porous layer of the solid electrolyte on a positive electrode plate side and/or negative electrode plate side, and the conductive material is one or more selected from carbon nanotubes, graphite, graphene, and Super P.

27. The secondary battery according to any one of claims 16 to 26, **characterized in that** the negative electrode plate comprises a negative electrode current collector and a primer layer disposed on at least one surface of the negative electrode current collector, wherein the primer layer comprises one or more of carbon nanotubes, graphite, graphene, silver and carbon composite nanoparticles, and tin and carbon composite nanoparticles.

28. The secondary battery according to claim 27, **characterized in that** an areal density of the primer layer is 5 g/m² to 50 g/m².

29. The secondary battery according to claim 27 or 28, **characterized in that** a thickness of the primer layer is 2 µm to 100 µm.

30. A battery module, **characterized by** comprising the secondary battery according to any one of claims 16 to 29.

31. A battery pack, **characterized by** comprising the secondary battery according to any one of claims 16 to 29 or the battery module according to claim 30.

32. An electric apparatus, **characterized by** comprising at least one of the secondary battery according to any one of claims 16 to 29, the battery module according to claim 30, and the battery pack according to claim 31.
